Europäisches Patentamt

(19) European Patent Office

Office européen des brevets

(11) Publication number: **0 203 628 B1**

(12) **EUROPEAN PATENT SPECIFICATION**

(45) Date of publication of patent specification: **16.08.89**

(21) Application number: **86200522.0**

(22) Date of filing: **26.03.86**

(51) Int. Cl.⁴: **A 23 D 3/02,** A 23 D 5/02, B 29 C 47/38

(54) Process for the preparation of an edible fat-containing product.

(30) Priority: **27.03.85 GB 8508014**
**24.05.85 NL 8501488**

(43) Date of publication of application:
**03.12.86 Bulletin 86/49**

(45) Publication of the grant of the patent:
**16.08.89 Bulletin 89/33**

(84) Designated Contracting States:
**AT BE CH DE FR GB IT LI NL SE**

(56) References cited:
**EP-A-0 101 104**
**WO-A-83/03222**
**GB-A- 944 705**
**GB-A-1 327 511**

(73) Proprietor: **UNILEVER NV**
**Burgemeester s'Jacobplein 1 P.O. Box 760**
**NL-3000 DK Rotterdam (NL)**
㉞ **BE CH DE FR IT LI NL SE AT**

(73) Proprietor: **UNILEVER PLC**
**Unilever House Blackfriars P.O. Box 68**
**London EC4P 4BQ (GB)**
㉞ **GB**

(72) Inventor: **Bodor, Janos**
**Prins Hendriklaan 38**
**NL-2281 EC Rijswijk (NL)**
Inventor: **van Heteren, Jan**
**Acaciadreef 14**
**NL-3137 BB Vlaardingen (NL)**
Inventor: **Poot, Cornelis**
**Anna van Burenstraat 24**
**NL-3136 CG Vlaardingen (NL)**
Inventor: **Willemse, Henricus Wilhelmus**
**Rembrandtlaan 78**
**NL-3117 VP Schiedam (NL)**

(74) Representative: **van der Toorren, Johannes, Drs.**
**et al**
**UNILEVER N.V. Patent Division Postbus 137**
**NL-3130 AC Vlaardingen (NL)**

Courier Press, Leamington Spa, England.

**Description**

The present application is concerned with a process for the preparation of an edible fat-containing product by cooling a fat-containing composition to cause crystallization of part of the fat and subjecting the composition containing crystallized fat to working and resting conditions.

Such a process is, for example, described in A. J. C. Anderson, Margarine, Pergamon Press Limited, London, 1954, pages 231—232. In this process the composition is cooled by passing it through a series of heat exchangers of the Votator® type (A-units). The composition is subsequently subjected to working and resting conditions by passing it through a resting tube (B-unit) which is provided with wire screens or perforated plates (sieve plates). The purpose of passing the composition through a B-unit provided with sieve plates is, inter alia, to improve the consistency of the product obtained.

From EP—A—101,104, it is known to prepare an edible oil and water containing emulsion comprising inter alia processing an oil-in-water emulsion and a separate water phase followed by mixing these phases to obtain the final emulsion.

GB—A—1,327,511 describes mixing and emulsifying two separate process streams, one warm liquid containing crystallizable fat and a second, cold liquid-containing substantially no crystallizable fat, followed by working and packing of the partially crystallized mixture.

In NL—A—267559 a device is described consisting of an outer tube, within which tube coaxially a second tube is present, having a perforated wall. In this second tube a body is present which is enveloped by the second tube, the body and the tubes being such, that there exist passages between the first and the second tube. These passages are such that the liquid matter, for example margarine is repeatedly forced through the perforations of the second tube.

The present invention provides a process for the preparation of an edible fat-containing product by cooling a fat-containing composition to cause crystallization of part of the fat and subjecting the composition containing crystallized fat to working and resting conditions, wherein the composition is subjected to working conditions by passing it through a working device which comprises two closely spaced, mutually displaceable surfaces, each having a pattern of cavities which overlap during movement of one surface with respect to the other, between which surfaces the composition to be worked passes, and to resting conditions by passing it through a resting tube.

With the present process, improved products can be obtained. The present process is particularly advantageous for the preparation of products that contain fats which melt at relatively high temperatures. In the preparation of such products, the viscosity of the composition near the end of the production line is usually high, owing to the presence of a large amount of crystallized fat, particularly in the resting tube. As a consequence, high pressures are required to pass the composition through the production line. If sieve plates are used in the resting tube to improve the texture of the product, even higher pressures are required. Such high pressures can cause serious problems. Then the process is often carried out at less low temperatures than would be desirable, to reduce the amount of crystallized fat in the composition. This, however, may affect the quality of the product obtained. Another disadvantage of carrying out the process at higher temperatures is that the product leaving the production line has a higher temperature as well, which can make it more difficult to pack it.

The present process can be carried out at lower pressure and/or lower temperatures, and an excellent product can be obtained without processing difficulties.

Preferably, the fat contained in the composition is fat that comprises at least 20% by weight of crystallized fat after equilibration at 20°C. More preferably, the amount of crystallized fat that would be present after equilibration at 20°C of the fat that is used in the composition, is 25 to 60% by weight. It is particularly preferred that the fat contained in the composition is fat that comprises 35 to 50% by weight of crystallized fat after equilibration at 20°C.

The composition used in the present process preferably comprises at least 40% by weight fat; more preferably it comprises from 70 to 100% by weight fat.

The process is particularly suitable for the preparation of products, such as margarines and shortenings, which are to be used for the preparation of "puff pastry" (vol-au-vents), pie crusts and the like. However, it can also be used advantageously for the preparation of other products, e.g. margarines to be used as bread spread and frying fats.

The composition used in the present process may comprise, apart from fat, ingredients such as water, protein, gas, emulsifiers, gelling and thickening agents, salt, flavour compounds, colouring matter and mixtures of two or more thereof. Other ingredients, e.g. preservatives, may, however, also be present in small amounts.

In this application, by fat is meant, unless indicated otherwise, an edible substance, which may be solid or liquid at ambient temperature, consisting essentially of triglycerides such as, for example, soybean oil, sunflower oil, palm oil, coconut oil, fish oil, lard and tallow, which may have been partially or completely hydrogenated or modified otherwise, or comprising non-toxic material having physical properties similar to triglycerides, which material may be indigestible, such as for example waxes, e.g. jojoba oil and hydrogenated jojoba oil, and poly fatty acid esters of mono- and disaccharides, e.g. sucrose octa fatty acid ester, or mixtures thereof. Preferably, however, the fat used in the present process consists essentially of triglycerides.

The product prepared according to the present process preferably is a dispersed system having a continuous fat phase containing crystallized fat. Examples of such products are shortening, butter, margarines, low calorie spreads and melanges. By a low calorie spread is meant a product similar to butter or margarine, i.e. a product containing a dispersed aqueous phase, but containing less than about 80% by weight fat. By a melange is meant a product having a continuous fat phase and a dispersed aqueous phase and containing crystallized fat, wherein the fat comprises both butterfat and other fat.

In the present process, a single or double Votator® B-unit can suitably be used as resting tube. The resting tube may be provided with e.g. wire screens and/or perforated plates. In the present process, often a resting tube can be used of smaller volume than in conventional process. This is an advanrage because the process can then be carried out at a lower pressure and/or at lower temperatures.

The cooled composition containing crystallized fat may first be passed through the resting tube and subsequently through the working device, which may or may not be followed by another resting tube, but preferably the cooled composition containing crystallized fat is first passed through the working device and subsequently through the resting tube. The resting tube may be connected directly to the working device. The working device used in the present process comprises two closely spaced, mutually displaceable surfaces, each having a pattern of cavities which overlap during movement of one surface with respect to the other. The material moving between the surfaces traces a path through cavities alternatively in each surface.

Preferably, the surfaces of the working device have patterns of cavities such that a cavity on one of the surfaces continuously overlaps with at least two cavities on the other surface. In the preferred working device for this process, the cavities are arranged to give constantly available but changing pathways through the device during movement of one surface with respect to the other.

Suitably, the working device has a cylindrical geometry.

Preferably, the working device comprises a stator and a rotor; the opposing faces of the stator and rotor carry the cavities through which the material passes during its passage through the device. The external cylinder may be rotatable while the internal cylinder is fixed, but preferably the external cylinder is the stator within which the rotor is journalled.

The working device may also have a planar geometry in which opposed plane surfaces having patterns of cavities would be moved mutually. Another geometry that can be used is a cone geometry. A mixer of such geometry can comprise a rotor and a stator having shapes of truncated cones. An advantage of a planar or cone geometry is that the distance between the two surfaces can be varied easily. Other geometries can also be suitable, but working devices having a cylindrical geometry are preferred. The rotor may be placed eccentrically, but preferably it is placed centrally.

Various configurations can be used for the shape of the cavities. The cavities can, for example, be hemispherical or they can have the shape of a flattened hemisphere. Other shapes that can be used are, for example, half ellipsoids or cylinders having hemispherical closed ends or flattened varieties thereof.

In the International application, publication no. WO 83/03222, an extruder is described having a geometry of the above kind. In the publication it is mentioned that this extruder can be used for operations on margarines.

Suitable working devices which can be used in the present process will be described with reference to the accompanying diagrammatic drawings in which:

Figure 1 is a longitudinal section of a working device with cylindrical geometry;

Figure 2 is a transverse section along the line II—II on Figure 1;

Figure 3 illustrates the pattern of cavities in the device of Figure 1; and

Figures 4, 5 and 6 illustrate other patterns of cavities.

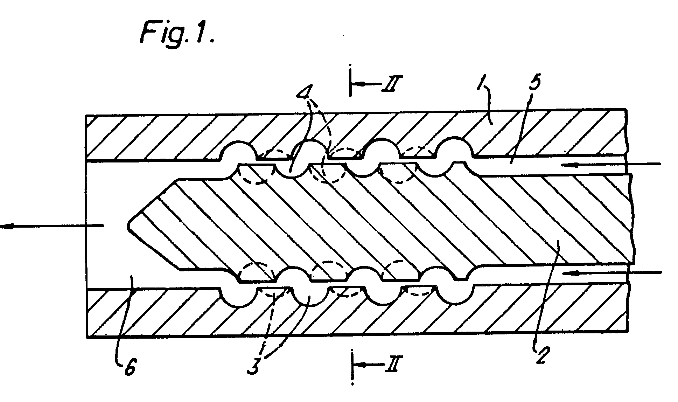

In Figure 1 is shown a working device in longitudinal section. This comprises a hollow cylindrical stator member 1, a cylindrical rotor member 2 journalled for rotation within the stator with a sliding fit, the facing cylindrical surfaces of the rotor and stator carrying respective pluralities of parallel, circumferentially extending rows of cavities which are disposed with:

a) the cavities in adjacent rows on the stator circumferentially offset;

b) the cavities in adjacent rows on the rotor circumferentally offset; and

c) the rows of cavities on the stator and rotor axially offset.

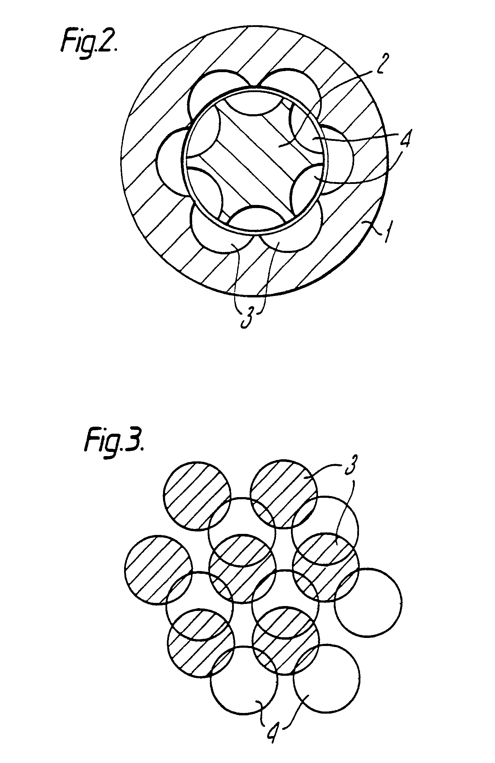

The pattern of cavities carried on the stator 3 and rotor 4 is illustrated in Figure 3. The cavities 3 on the stator are shown hatched. The overlap between patterns of cavities 3, 4 is also shown in Figure 2.

The material passing through the device moves through the cavities alternately on the opposing faces of the stator and rotor. The cavities immediately behind those shown in section are indicated by dotted profiles on Figure 1 to allow the repeating pattern to be seen.

The material flow is divided between pairs of adjacent cavities on the same rotor or stator face because of the overlapping position of the cavity on the opposite stator or rotor face.

The working device can, for example, have a rotor radius of 2.5 cm with 36 hemispherical cavities (radius 0.9 cm) arranged in six rows of six cavities. The internal surface of the stator can carry e.g. seven rows of six cavities to provide cavity overlap at the entry and exit. The material to be mixed is injected into the device through channel 5, which communicates with the annular space between the rotor and stator. The material leaves the device through exit 6.

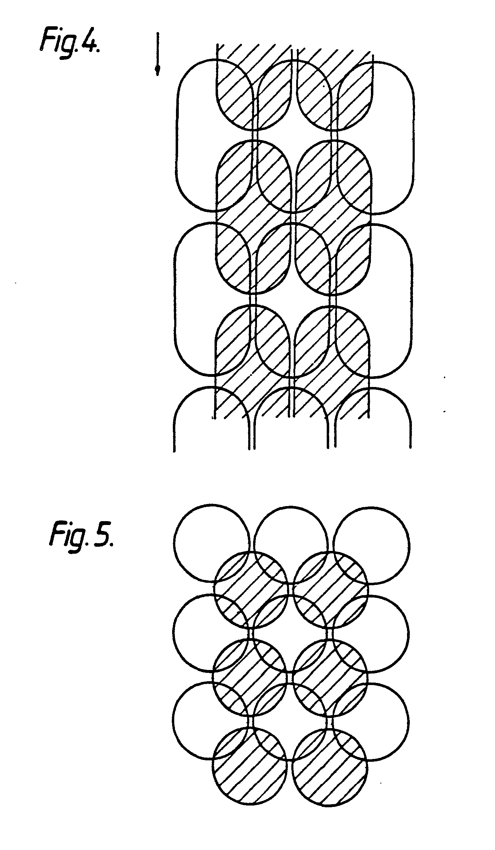

Figure 4 shows elongate cavities arranged in a square pattern; these cavities have the sectional profile

3

of Figure 2. These cavities are aligned with their longitudinal axis parallel to the longitudinal axis of the device and the direction of movement of material through the device; the latter is indicated by the arrow.

Figure 5 shows a pattern of cavities having the dimensions and profile of those shown in Figures 1, 2 and 3. The cavities of Figure 5 are arranged in a square pattern with each cavity being closely spaced from flow adjacent cavities on the same surface. This pattern does not provide as high a degree of overlap as given by the pattern of Figure 3. The latter has each cavity closely spaced to six cavities on the same surface, in a hexagonal pattern.

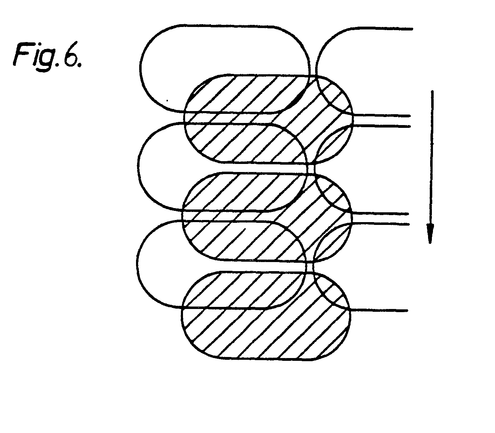

Figure 6 shows a pattern of cavities wherein the cavities on the rotor, shown hatched, and stator have a larger dimensional normal to the material flow; the latter is indicated by an arrow. The cavities are thus elongate. This embodiment can provide a lower pressure drop over its length compared with devices of similar geometry but not having cavities positioned with a longer dimensional normal, i.e. perpendicular to the material flow. To obtain a reduction in pressure drop, at least one of the surfaces must carry elongate cavities having their longer dimensional normal to the material flow.

## Example 1

A pastry margarine was prepared as follows:

6 parts by weight palm oil hydrogenated to a slip melting point of 42°C were mixed with 4 parts by weight of soybean oil. After equilibration at 20°C, the amount of crystallized fat was determined by NMR at that temperature, as described in "Fette, Seifen, Anstrichmittel" *80* (1978), 180—186 (N-value, expressed in wt.%). The N-value of the fat blend was 36.

The composition was prepared from the following ingredients:

82 wt.% fat blend
16 wt.% aqueous solution of citric acid (pH = 2.9)
2 wt.% salt.

The composition was homogenized in a premix vessel at 42°C.

The composition was cooled to a temperature of about 12°C, and subsequently further crystallized in a resting tube (B-unit) which did not contain any sieve plates or wire screens.

The composition leaving the resting tube was passed through a working device of the type shown in Figure 1, which was operated at a rotor speed of 1500 rpm.

The diameters of the stator and rotor were 28 and 27.7 mm, respectively, providing an annulus of 0.15 mm. The number of cavities on the stator and the rotor were 36 and 42, respectively. Each cavity had a diameter of 12 mm and a depth of 4 mm. The volume between the rotor and stator surfaces was 50 ml. The cylindrical part providing the stator surface, extended beyond the rotor, providing a volume of 150 ml between the part of the device in which the composition was subjected to working and the exit of the device. The diameter of the cylindrical part extending beyond the rotor also was 28 mm. This part did not contain cavities.

The product leaving the working device was packed.

For comparison, this experiment was repeated without using the working device. Instead, the B-unit was provided with a sieve plate, i.e. a perforated plate.

The quality of the two products was evaluated by a panel of experts highly experienced in the preparation of puff pastry. The panel used a scale from 1 to 10. Score 1 indicates a very poor product. The score for the product obtained in Example 1 was 9; the score for the comparative product was 7.5.

## Example 2

Pastry margarine was prepared from the same composition as described in Example 1, but containing rapeseed oil instead of soybean oil. The N-value of the fat blend at 20°C was 37.

The composition was homogenized at 70°C. Subsequently, the composition was cooled to a temperature of about 13°C.

The composition was then led through a working device as described in Example 1, which was operated at a rotor speed of 150 rpm, and subsequently through a small B-unit. The B-unit did not contain sieve plates. The product leaving the B-unit was packed.

The pressures before and after the cooling stage and the temperatures, solids contents and hardness of the product leaving the production line and after 15 minutes storage at ambient temperature are given in Table I. The hardness was determined with a cone penetrometer as described in J.A.O.C.S. *36* (1959), 345—348 (C-value).

The product was stored for one week at 20°C.

For comparison, Example 2 was repeated using, instead of the working device and the small B-unit, a large resting tube, the first part of which consisted of a so-called double B-unit (which comprises two parallel legs, which are connected at the beginning and the end, and a switch which directs the product stream alternately into one leg or the other) having two legs, each of which contained sieve plate, and the second part of which consisted of a single B-unit connected to the exit of the double B-unit, which single B-unit contained another sieve plate. Some process and product parameters are shown in Table I.

The quality of the products obtained was determined by a panel of experts who prepared vol-au-vents using conventional Dutch and French recipes, Scores were given for "margarine stickiness", which influences the ease of handling, and for the leavening structure of the pastry obtained. For both evaluations scales from 1 to 5 were used. The results are shown in Table II.

Example 3

Example 2 was repeated three times. The composition was cooled to a temperature of about 8°C. The working device was operated at a rotor speed of 300, at 150 and at 50 rpm. The results are shown in Tables I and II.

Table I

| Example | 2 | comp. | 3 | | |
|---|---|---|---|---|---|
| rotor speed working device (rpm) | 150 | – | 300 | 150 | 50 |
| Pressure before the cooling stage (bar) | 25 | 48 | 35 | 32 | 32 |
| Pressure after the cooling stage (bar) | 4 | 35 | 5 | 5 | 5 |
| Temp. pack (°C) | 16.8 | 21.6 | 10.3 | 10.7 | 10.4 |
| N pack* | 20.3 | 26.3 | 24.0 | 25.8 | 24.7 |
| C pack (g/cm$^2$) | 2200 | 700 | 1230 | 1740 | 3450 |
| Temp. after 15 min (°C) | 22.5 | 21.7 | 18.8 | 18.8 | 18.7 |
| N after 15 min* | 27.5 | 27.5 | 34.5 | 34.2 | 35.0 |
| C after 15 min (g/cm$^2$) | 1000 | 1460 | 8000 | 6800 | 4680 |

\* amount of crystallized fat in wt.% on the total product

## Table II

| Example | 2 | comp. | 3 | | |
|---|---|---|---|---|---|
| rotor speed working device (rpm) | 150 | - | 300 | 150 | 50 |
| Margarine stickiness* | 4 | 3-4 | 2 | 1 | 3 |
| leavening structure** French recipe | 2 | 3-4 | 2-3 | 2-3 | 2-3 |
| Dutch recipe | 2-3 | 3 | 2-3 | 2-3 | 2-3 |

* scale 1-5; score 1: most preferred
score 5: least preferred

** scale 1-5; Score 1 indicates excellent performance,
score 5 indicates poor performance.

Table II shows that the leavening structures of all products obtained with the margarines of examples 2—3 are all improved as compared with the comparative example.

All three margarines of Example 3 also have an improved stickiness in comparison with the comparative example.

As can be seen from Table I, the product of Example 2 was much harder at the packing stage than the comparative product, despite the fact that a much smaller B-unit was used. Also the pressure that was needed to carry out Example 2 was much lower. In Example 3, the temperature of the product at the end of the line could be lowered without causing very high line pressure to occur.

Example 4

A 60% fat-containing dairy spread was prepared in the manner described in Example 2, from a fat blend having an $N_{20}$-value of 20. The product fed to the working device had a temperature of 6°C and a SFC of 13.9%. The line pressure was 13.5 bar, capacity 80 kg/h, pressure drop across the working device 1,5 bar and rotor speed of the working device 150 rpm. At the end of the working device the temperature was 10°C and the SFC 19.5%.

The dairy spread obtained at the end of the resting unit had a solid fat content of 20,5% and a temperature of 10°C. The C pack was 550.

Example 5

Example 4 was repeated with this difference, that the rotor speed was 300 rpm. At the end of the working device the temperature was 11.2°C and the SFC 18%.

The product has a solid fat content of 19.2% and a temperature of 11.5°C. The C pack was 350.

Example 6

Using the equipment of Example 4, a 100% fat product, frying fat, was prepared using a mixture of 77 wt.% hardened fat and 23 wt.% liquid oil. The line pressure was 19 bar, pressure drop 5 bar, and rotor speed 1060 rpm. The product fed to the working unit had a temperature of 10.4°C and a SFC of 23.3%. After the working unit the temperature of the product was 14.2°C and the SFC was 24.8%. At the end of the line one obtained a product with a solid fat content of 29.4 and a temperature of 19.1°C. The C pack was 650. The product was very homogeneous with C10 = 2300, C15 = 1900 and C20 = 1335.

EP 0 203 628 B1

Example 7
Example 6 was repeated with the following conditions:

line pressure : 20 bar

pressure loss : 6 bar

rotor speed : 300 rpm

The product fed to the working unit had a temperature of 10.7°C and a SFC of 22.5%. After the working unit the temperature was 13.4°C and the SFC was 23.3%.

The product obtained after the resting unit has a solid fat content of 30% and a temprature of 18.3°C. C pack was 850. The product was very homogeneous and had a C10 = 3025, C15 = 2175 and C20 = 1490.

**Claims**

1. Process for the preparation of an edible fat-containing product by cooling a fat-containing composition to cause crystallization of part of the fat and subjecting the composition containing crystallized fat to working and resting conditions, wherein the composition is subjected to working conditions by passing it through a working device which comprises two closely spaced, mutually displaceable surfaces, each having a pattern of cavities which overlap during movement of one surface with respect to the other, between which surfaces the composition to be worked passes, and to resting conditions by passing it through a resting tube.

2. Process according to claim 1, wherein the fat contained in the composition is fat that comprises at least about 20% by weight of crystallized fat after equilibration at 20°C.

3. Process according to claim 2, wherein the fat contained in the composition is fat that comprises from 25 to 60% by weight of crystallized fat after equilibration at 20°C.

4. Process according to claim 3, wherein the fat contained in the composition is fat that comprises from 35 to 50% by weight of crystallized fat after equilibration at 20°C.

5. Process according to any one of claims 1—4, wherein the composition comprises at least 40% by weight of fat.

6. Process according to claim 5, wherein the composition comprises from 70 to 100% by weight fat.

7. Process according to any one of claims 1—6, wherein the composition is passed through the working device and subsequently through the resting tube.

8. Process according to any one of claims 1—7 wherein a cavity of one of the surfaces of the working device continuously overlaps with at least two cavities on the other surface.

9. Process according to any one of claims 1—8 wherein the surfaces are rotor and stator surfaces.

10. Edible fat-containing product, whenever prepared according to the process of any one of claims 1—9.

**Patentansprüche**

1. Verfahren zur Herstellung eines ein eßbares Fett enthaltenden Produktes durch Abkühlen einer fetthalgiten Zusammensetzung, um einen Teil des Fettes zu kristallisieren, und durch Bearbeiten und Ruhenlassen der das kristallisierte Fett enthaltenden Zusammensetzung, dadurch gekennzeichnet, daß die Zusammensetzung Bearbeitungsbedingungen unterworfen wird, indem sie durch eine Bearbeitungsvorrichtung geleitet wird, die zwei gegeneinander in geringem Abstand zueinander verschiebbare Oberflächen umfaßt, die jeweils ein Muster von Hohlräumen aufweisen, die während der Bewegung der einen Oberfläche in Bezug zur anderen überlappen, zwischen welchen die zu bearbeitende Zusammensetzung hindurchläuft, und Ruhebedingungen unterworfen wird, indem sie durch ein Ruherohr geleitet wird.

2. Verfahren nach Anspruch 1, in welchem das in der Zusammensetzung enthaltene Fett ein Fett ist, das mindestens etwa 20 Gew.-% kristallisiertes Fett nach Äquilibrierung bei 20°C umfaßt.

3. Verfahren nach Anspruch 2, in welchem das in der Zusammensetzung enthaltene Fett ein Fett ist, das 25 bis 60 Gew.-% kristallisiertes Fett nach Äquilibrierung bei 20°C umfaßt.

4. Verfahren nach Anspruch 3, in welchem das in der Zusammensetzung enthaltene Fett ein Fett ist, das 35 bis 50 Gew.-% kristallisiertes Fett nach Äquilibrierung bei 20°C umfaßt.

5. Verfahren nach irgendeinem der Ansprüche 1 bis 4, in welchem die Zusammensetzung mindestens 40 Gew.-% Fett umfaßt.

6. Verfahren nach Anspruch 5, in welchem die Zusammensetzung 70 bis 100 Gew.-% Fett umfaßt.

7. Verfahren nach irgendeinem der Ansprüche 1 bis 6, in welchem die Zusammensetzung durch eine Bearbeitungsvorrichtung und anschließend durch das Ruherohr geleitet wird.

8. Verfahren nach irgendeinem der Ansprüche 1 bis 7, in welchem ein Hohlraum auf einer der Oberflächen der Bearbeitungsvorrichtung sich kontinuierlich mit mindestens 2 Hohlräumen auf der anderen Oberfläche überlappt.

7

9. Verfahren nach irgendeinem der Ansprüche 1 bis 8, in welchem die Oberflächen Rotor- und Statoroberflächen sind.

10. Ein eßbares Fett enthaltendes Produkt, hergestellt nach dem Verfahren nach irgendeinem der Ansprüche 1 bis 9.

**Revendications**

1. Procédé pour la préparation d'un produit comestible contenant une graisse en refroidissant une composition contenant une graisse pour provoquer la cristallisation d'une partie de la graisse et en soumettant la composition contenant la graisse cristallisée à des conditions detravail et de repos, procédé dans lequel on soumet la composition à des conditions de travail en la faisant passer à travers un dispositif de travail qui comporte deux surfaces étroitement espacées et mutuellement mobiles ayant chacune un motif de cavités qui se superposent pendant le mouvement d'une surface par rapport à l'autre, surfaces entre lesquelles passe la composition à travailler; et à des conditions de repos consistant à la faire passer à travers un tube de repos.

2. Procédé selon la revendication 1, dans lequel la graisse contenue dans la composition est une graisse qui comprend au moins 20% en poids environ de graisse cristallisée après équilibrage à 20°C.

3. Procédé selon la revendication 2, dans lequel la graisse contenue dans la composition est une graisse qui comprend de 25 à 60% en poids de graisse cristallisée, après équilibrage à 20°C.

4. Procédé selon la revendication 3, dans lequel la graisse contenue dans la composition est une graisse qui comprend de 35 à 50% en poids de graisse cristallisée, après équilibrage à 20°C.

5. Procédé selon l'une quelconque des revendications 1 à 4, dans lequel la composition comprend au moins 40% en poids de graisse.

6. Procédé selon la revendication 5, dans lequel la composition comprend de 70 à 100% en poids de graisse.

7. Procédé selon l'une quelconque des revendications 1 à 6, dans lequel on fait passer la composition à travers le dispositif de travail et ensuite à travers le tube de repos.

8. Procédé selon l'une quelconque des revendications 1 à 7, dans lequel une cavité sur l'une des surfaces du dispositif de travail recouvre continuellement au moins deux cavitiés de l'autre surface.

9. Procédé selon l'une quelconque des revendications 1 à 8, dans lequel les surfaces sont des surfaces de rotor et de stator.

10. Produit comestible contenant de la graisse quand il est préparé par le procédé selon l'une quelconque des revendications 1 à 9.

*Fig.1.*

Fig.2.

Fig.3.

*Fig.4.*

*Fig.5.*

Fig.6.